# EUROPEAN PATENT APPLICATION

(11) **EP 4 336 329 A1**
(43) Date of publication of application: **13.03.2024**
(21) Application number: 22819375.1
(22) Date of filing: 27.05.2022
(51) Int. Cl.: G06F 3/0481

(54) **MULTIMEDIA PROCESSING METHOD AND APPARATUS, AND DEVICE AND MEDIUM**

(30) Priority: 08.06.2021 CN 202110637048
(71) Applicant: Beijing Zitiao Network Technology Co., Ltd., Beijing 100190 (CN)
(72) Inventor: CHEN, Kojung, Beijing 100086 (CN); YANG, Jingsheng, Beijing 100086 (CN); XU, Wenming, Beijing 100086 (CN); ZHENG, Xiang, Beijing 100086 (CN); DU, Chunsai, Beijing 100086 (CN); ZHAO, Li, Beijing 100086 (CN)
(74) Representative: Dentons UK and Middle East LLP
(86) International application number: PCT/CN2022/095452
(87) International publication number: WO 2022/257777

(57) **Abstract**

This disclosure discloses a multimedia processing method, apparatus, device, and medium. The method for multimedia processing includes: displaying an initial text content, wherein the initial text content corresponds to a target multimedia content; playing an associated multimedia content in response to a triggering operation for the associated multimedia content; wherein the associated multimedia content comprises a segment associated with a target text content in the target multimedia content, and the target text content is extracted from the initial text content.

## Description

The present application claims priority to Chinese Patent Application No. 202110637048.3 filed with the Chinese Patent Office on June 8, 2021, the entirety of which is incorporated herein by reference.

### FIELD

The disclosure relates to the field of conference recognition technology, for example, to a method, apparatus, device, and medium for multimedia processing.

### BACKGROUND

With the continuous development of multimedia technology, online communication is increasingly used in daily life and work life because of its outstanding performance in communication efficiency and information retention.

In some related products, it is possible to record the process of online communication and generate multimedia files for reviewing after the online communication. However, in some scenarios with long communication time, reviewing relevant content by playing back multimedia files may take a lot of time, and accordingly, the efficiency of obtaining important information during communication is not high.

### SUMMARY

The disclosure provides a method, apparatus, device and medium for multimedia processing.

The disclosure provides a method for multimedia processing, comprising:
displaying an initial text content, wherein the initial text content corresponds to a target multimedia content; and
playing an associated multimedia content in response to a triggering operation for the associated multimedia content;
wherein the associated multimedia content comprises a segment associated with a target text content in the target multimedia content, and the target text content is extracted from the initial text content.

The disclosure also provides an apparatus for multimedia processing, comprising:
a text display module configured to display an initial text content, wherein the initial text content corresponds to a target multimedia content; and
a multimedia playing module configured to play an associated multimedia content in response to a triggering operation for the associated multimedia content;
wherein the associated multimedia content comprises a segment associated with a target text content in the target multimedia content, and the target text content is extracted from the initial text content.

The disclosure also provides an electronic device, comprising: a processor; a memory configured to store instructions that are executable by the processor; the processor being configured to read the instructions from the memory and execute the instructions to implement the above method for multimedia processing.

The disclosure also provides a computer-readable storage medium storing a computer program that is used to execute the above method for multimedia processing.

### BRIEF DESCRIPTION OF THE DRAWINGS

FIG 1 is a flowchart of a method for multimedia processing provided in an example of the disclosure.
FIG 2 is a schematic diagram of a multimedia playing provided in an example of the disclosure.
FIG 3 is a flowchart of another method for multimedia processing provided in the disclosure.
FIG 4 is a schematic structural diagram of an apparatus for multimedia processing provided in an example of the disclosure.
FIG 5 is a schematic structural diagram of an electronic device provided in the disclosure.

### DETAILED DESCRIPTION

The following will describe the examples of the disclosure with reference to the accompanying drawings. Although some examples of the disclosure are shown in the drawings, the disclosure can be implemented in various forms, and these examples are provided to understand the disclosure. The drawings and examples of the disclosure are for illustrative purposes only.

The multiple steps described in the implementation methods of this disclosure can be executed in different orders and/or in parallel. In addition, the implementation methods can include additional steps and/or omit the steps shown. The scope of this disclosure is not limited in this regard.

The term "including" and its variations as used herein are open to include, i.e. "including but not limited to". The term "based on" means "at least partially based on". The term "one example" means "at least one example"; the term "another example" means "at least one additional example"; and the term "some examples" means "at least some examples". Relevant definitions of other terms will be given in the following description.

The concepts of "first" and "second" mentioned in this disclosure are only used to distinguish different apparatuses, modules, or units, and are not used to limit the order or interdependence of the functions performed by these apparatuses, modules, or units.

The modifications of "one" and "multiple" mentioned in this disclosure are illustrative and not restrictive. Those skilled in the art should understand that unless otherwise indicated in the context, they should be understood as "one or more".

The names of the messages or information exchanged between multiple apparatuses in this disclosureare for illustrative purposes only and are not intended to limit the scope of these messages or information.

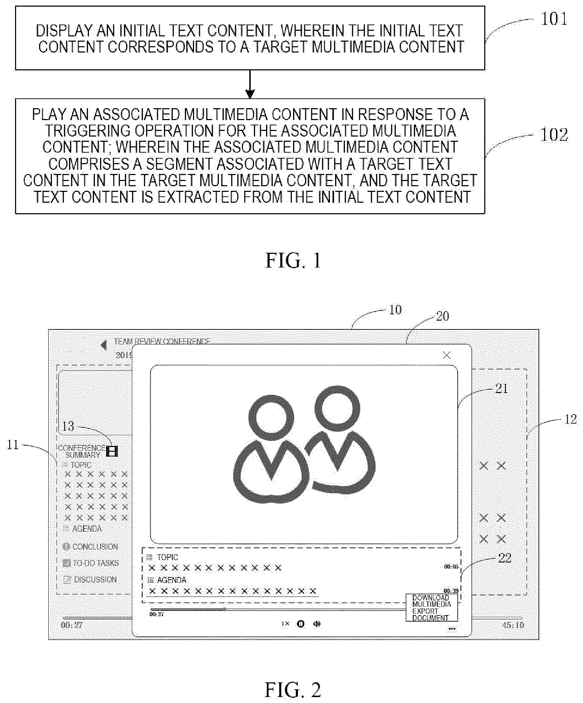

FIG. 1 is a schematic flowchartof a method for multimedia processing provided in an example of the disclosure. The method can be performed by an apparatus for multimedia processing, wherein the apparatus can be implemented in software and/or hardware and can generally be integrated in an electronic device. As shown in FIG. 1, the method includes:
Step 101, displaying an initial text content, wherein the initial text content corresponds to a target multimedia content.

The target multimedia content can be a multimedia content achieved by recording the communication process between multiple users, for example, it can be a multimedia content achieved by recording a meeting. This example does not limit the format of the target multimedia content, for example, the format of the target multimedia content can be audio and/or video. The initial text content can be a text content achieved after identifying and processing the target multimedia content, for example, the initial text content can be the text content obtained by automatic speech recognition of the target media content.

In one example of the disclosure, a terminal device may acquire an initial text content corresponding to the target multimedia content and display the initial text content in a text area of a display interface. Optionally, the display interface may further include a multimedia area for displaying the target multimedia content.

Step 102, playing an associated multimedia content in response to a triggering operation for the associated multimedia content; wherein the associated multimedia content comprises a segment associated with a target text content in the target multimedia content, and the target text content is extracted from the initial text content.

The target text content can be a key content generated by extracting and processing based on the initial text content. For example, when the initial text content is conference subtitles, the target text content can be the main content of the conference extracted from the conference subtitles, that is, conference summary. The associated multimedia content can be a multimedia segment associated with the target text content in the target multimedia content. For example, when the target text content is a conference summary, the associated multimedia content can be a multimedia summary, such as a conference summary in audio and/or video formats.

In one example of the disclosure, a terminal device can detect a user's triggering operation through a built-in detection program or algorithm. After receiving the user's triggering operation for the associated multimedia content, the terminal device can obtain the pre-generated associated multimedia content and play the associated multimedia content. For example, the associated multimedia content can be played in a preset area of the display interface inwhere the initial text content is displayed. Or a new display interface can be opened, and the associated multimedia content may be played in the new display interface. The new display interface may display by suspending in the display interface inwhere the initial text content is displayed.

The triggering operation for the associated multimedia content can be a triggering operation of a setting button or setting information set in the display interface of the initial text content. This example does not limit the triggering operation mode of the associated multimedia content, for example, it can be a click operation and/or a hover operation. The above setting button and setting information can also be set according to an actual situation, for example, the setting button can be a button set around the target text content.

FIG. 2 is an example schematic diagram of a multimedia playing provided by an example of the disclosure. As shown in FIG. 2, taking a conference scenario as an example, the initial text content is conference subtitles, the target text content is a conference summary, the target multimedia content is a conference video, and the associated multimedia content is a multimedia summary. FIG. 2 shows the first display interface 10. The first area 11 in the first display interface 10 displays the conference summary, the top of the first area 11 displays the conference video, the second area 12 displays the conference subtitles, and the bottom of the first display interface 10 can display a play timeline of the conference video or a conference audio. The second display interface 20 may display in suspension above the first display interface 10. When the second display interface 20 displays, the first display interface 10 can display darker to prominently display the second display interface 20. A button 13 can be set in the first display interface 10. When a user triggers the button 13, a multimedia summary can be played in a first area 21 in the second display interface 20, and a play timeline of the multimedia summary is displayed in the second display interface 20. The setting position of the button 13 is only an example.

A scheme of multimedia processing provided in one example in the disclosure includes displaying the initial text content, wherein the initial text content corresponds to the target multimedia content; playing the associated multimedia content in response to the triggering operation for the associated multimedia content; wherein the associated multimedia content includes a segment associated with the target text content in the target multimedia content, and the target text content is extracted from the initial text content. With the above technical solution, the target text content and the corresponding associated multimedia content can be generated on the basis of the initial text content, and the associated multimedia content can be played when a user performs a triggering operation. Users can quickly understand a part of the initial text content (such as the key content) by watching the associated multimedia content, which could save time, help users to understand the initial text content, and improve the user experience.

In some examples, displaying the initial text content includes: displaying the initial text content in response to a triggering operation for a list page, wherein the list page displays abstract information of a plurality of multimedia contents. The list page can be a page containing a plurality of list items, and each of the plurality of list items correspondes to a multimedia content. For example, the abstract information of the multimedia content can be displayed in the list item. In addition to the abstract information of the multimedia content, the list item can also display the serial number or recording date of the multimedia content, etc. This example is not limited to this. A user triggers the list page by selecting a list item corresponding to a target multimedia content on the list page, and the terminal device displays the initial text content corresponding to the target multimedia content in response to the triggering operation.

In some examples, the target text content includes at least two consecutive text segments extracted from the initial text content. Optionally, playing an associated multimedia content in response to a triggering operation for the associated multimedia content includes: in response to the triggering operation for the associated multimedia content, according to an order of associated time periods of the at least two consecutive text segments of the target text content in the target multimedia content, playing by jumping across multimedia segments in the target multimedia content, each of the multimedia segments corresponding to an associated time period of eachone of the consecutive text segments.

The above-mentioned target text content includes at least two consecutive text segments, which can be extracted from the initial text content. The "consecutive" here representes that the extracted text segments have a before-and-after relationship, that is, the target text content is regarded as a whole in this scheme, and a plurality of text segmentsincluded in the target text content are regarded as continuous. For example, when the target text content is a conference summary, the conference summary can include multiple summaries, and the entire conference summary are treated as a whole in this scheme for subsequent processing.

The associated time periods of the consecutive text segments refer to time periods of multimedia segments corresponding to the consecutive text segments in the target multimedia content, and an associated time period may include a start time and an end time.

In one example in the disclosure, after the terminaldevice receiving the trigger operation for the associated multimedia content, the associated multimedia content can be played, and during a playing process, according to an order of associated time periods of the at least two consecutive text segments in the target multimedia content, playing by jumping across multimedia segments corresponding to the associated time periods of the consecutive text segments in the target multimedia content. That is, a part of the associated multimedia content corresponding to at least two consecutive text segments in the target multimedia content can be played in sequence, and then the associated multimedia content can be played. The advantage of this is that the segments corresponding to the target text content in the target multimedia content can be played by jumping directly in the display interface of the target multimedia content, which can enable users to quickly understand the key points of the conferenceand save time.

In some examples, the method for multimedia processing may further include: determining the associated multimedia content based on the target text content. Optionally, determining the associated multimedia content based on the target text content, including generating the associated multimedia content based on the associated time period of the target text content, wherein the associated time period of the target text content is used to characterize a time period of speech information corresponding to the target text content in the target multimedia content.

Although the target text content is extracted from the initial text content, the target text content is not exactly the same as the initial text content. Therefore, the associated time period of the target text content refers to a time period when the speech information of the text corresponding to the target text content in the initial text content is in the target multimedia content. In this example, the associated multimedia content can be generated according to the associated time period of the target text content, and the associated multimedia content can be a separate multimedia file. The associated multimedia content can be generated by a terminal device or a server. This embodiment is not limited to this.

Optionally, the generating the associated multimedia content based on the associated time period of the target text content including: in response to that there are a plurality of associated time periods, generating the associated multimedia content by joining a plurality of multimedia segments corresponding to the plurality of associated time periods according to an order of the plurality of associated time periods in the target multimedia content. According to each associated time period, the multimedia segment can be intercepted from the target multimedia content, and then multiple multimedia segments can be joinnedin the order of the plurality of associated time periods in the target multimedia content to obtain the associated multimedia content.

Optionally, the generating the associated multimedia content based on the associated time period of the target text content, including: adjusting the associated time period of the target text content based on a sentence integrity of an associated text of the target text content; and generating the associated multimedia content based on the adjusted associated time period. Wherein, the associated text is the text corresponding to the target text content in the initial text content.

Since the target text content is obtained by processing the initial text content, and the initial text content is obtained by automatic speech recognition of speech information in the target multimedia content, the associated text of the target text content refers to the text corresponding to the target text content in the initial text content. For example, when the target text content isa conference summary, the associated text of the conference summary can be a subtitle text corresponding to the conference summary. The associated text of the target text content corresponds to the above-mentioned associated time period.

Since the associated text of the target text content may be incomplete, in one example in the disclosure, the terminal device can detect the associated text of the target text content according to the Voice Activity Detection (VAD) algorithm and/or the semantic detection algorithm and widen the associated time period of the target text content according to the sentence integrity and coherence. Here, the widening process can refer to, for example, moving the start time corresponding to the associated time period forward and/or moving the end time corresponding to the associated time period backward. Afterwards, the associated multimedia content can be generated according to the widened associated time period. The widened associated time period is called the target time period. A plurality of multimedia segments corresponding to a plurality of target time periods are joined according to an order of the plurality of target time periods in the target multimedia content to generate the associated multimedia content. In this way, by widening the associated time period to obtain the target time period, contextual information can be provided on the basis of ensuring the integrity of the target content corresponding to the intercepted multimedia segments.

For example, when the target text content is conference summary, the associated time period of a conference summaryis 10S-20S. If the time point of 10S is determined to be the middle of a complete sentence or paragraph based on detection, the associated time period can be widened forward to 5S, that is, the final determined time period after the widening process is 5S-20S.

Optionally, in the process of generating multimedia summary, when joining multimedia segments, sound and images can be processed to add a gradual in and out effects for avoiding possible abruptions caused by segment interception in subsequent playing and improving user browsing performance.

In the above scheme, an associated multimedia content including important information can be generated condensingly by joinning according to the associated text of the target text content; or the above-mentioned associated multimedia content can be generated according to the widen association time period in the consideration of the integrity of the sentence. This scheme could ensure the completeness of important information. Users can quickly understand the key points by browsing the associated multimedia content, which is more conducive to users' understanding of the key points.

In some examples, the associated multimedia content is a multimedia summary, the multimedia summary includes at least two multimedia sub-summaries, each multimedia sub-summary corresponds to a type of the summary, and there are at least two types of the summary. Optionally, the playing an associated multimedia content in response to a triggering operation for the associated multimedia content, including: determining a target type of the summary corresponding to the triggering operation in response to the triggering operation for the associated multimedia content; and obtaining a target multimedia sub-summary corresponding to the target type of the summary and playing the target multimedia sub-summary; or obtaining the multimedia summary and playing the multimedia summary based on a time period of the target type of the summary in the multimedia summary.

In this example, when the target text content is a text summary, there could be a plurality of types of summary. In this example in the disclosure, the types of summary can include topics, agendas, discussions, conclusions, and to-do tasks, etc. Each type of summary can include a plurality of text summaries, and the number of the text summaries is unlimited. In this example in the disclosure, for each type of summary, corresponding multimedia sub-summaries can be generated, that is, the multimedia summary can include a plurality of multimedia sub-summaries, and the plurality of multimedia sub-summaries correspond to a plurality of types of summary respectively. The generation method of the multimedia sub-summary is the same as that of the complete multimedia summary described above, and the generation method of the multimedia sub-summary will not be repeated here.

In one example of the disclosure, after receiving the triggering operation of a user for the associated multimedia content, the triggering operation can be used to play a multimedia sub-summary of a type of summary. A target type of summary corresponding to the triggering operation for playing can be determined first, and a target multimedia sub-summary corresponding to the target type of summary can be obtained. Then the target multimedia sub-summary is played in the summary play interface. Alternatively, after determining the target type of summary, the complete multimedia summary can be obtained and played from a corresponding time period according to a time period of the target type of summary in the multimediasummary, that is, a time period of the target multimedia sub-summary in the multimedia summary.

As shown in FIG 2, for each type of summary, a button 13 can be set near the type of summary in the first display interface 10, so that a user can play only a multimedia sub-summary corresponding to the type of summary.

In the above scheme, when the associated multimedia content is a multimedia summary, for each of different types of summaries, corresponding multimedia sub-summaries can be generated. Users are supported to play multimedia sub-summaries only for one type of summary, which improves the display flexibility of multimedia summary and is more conducive to users to understand the key points of the conferencein a targeted manner, thereby improving the user experience.

In some examples, the target text content is a target text summary, and the target text summary includes a summary of at least one type; the method for multimedia processing may further include: displaying an identification of the type of the summary corresponding to the target text summary in association on a play timeline of the associated multimedia content. Optionally, the displaying an identification of the type of the summary corresponding to the target text summary in association on the play timeline of the associated multimedia content, including: displaying the identification of the type of the summary corresponding to the target text summary at an associated time point corresponding to the target text summary on the play timeline of the associated multimedia content. Among them, the associated time point corresponding to the target text summary is any time point in the associated time period of the target text summary.

When the target text content is a target text summary, the target text summary may include one or more types of summary. In this example, for the associated multimedia content, the type of each summary of included in the corresponding target text summary can be determined first, and the identification of the corresponding type of the summary is displayed at an associated time point or an associated time interval corresponding to the target text summary on the play timeline of the associated multimedia content. The above-mentioned identification of the type of summary is used to characterize the type of summary. This example does not limit the characterizing form of the type of summary, for example, it can be characterized by text, subtitles, or graphics. The associated time point corresponding to the target text summary can be set according to the actual situation, for example, the start time point, intermediate time point, or end time point of the associated time period of the target text summary can be set as the associated time point, or a period from the start time point, a period from a time point between the start time point and the end time point, or a period from a time point between the start time point and the end time point to the end time point can be used as the associated time interval.

In the above example, when the target text content is the target text summary, the termini device may also display identifications of types of summary of different summaries, to remind a user of a corresponding type of summary, which better meet the actual needs of users and improve the efficiency of users' understanding of the key points of the conference.

In some examples, the method for multimedia processing may further include: during playing of associated multimedia contents, prominently displaying target text contents corresponding to a playing progress of the associated multimedia contents in sequence.

In one example of the disclosure, the terminal device can also display the target text content, and during playing of associated multimedia contents, the associated time periods corresponding to the playing progress of the associated multimedia contents can be sequentially determined, and then the text contents corresponding to the play progress can be determined in the target text content, and the text content corresponding to the play progress can be prominently displayed. The way of prominently displaying is not limited in the disclosed example, and the method of prominently displaying can be any display method that is feasible and can be distinguished from other conference summaries, for example, it can include but is not limited to at least one of highlighting, bold, and adding underscores.

For example, as shown in FIG 2, conference summary can be displayed in the second area 22 of the second display interface 20. As shown in FIG 2, from the play timeline, it can be seen that the playing progress of multimedia summary is in the middle. Conference summary with agenda type of summary corresponds to the playing progress and are prominently displayed by adding underscores.

In the above schemes, on the basis of playing the associated multimedia content, the target text content can also be displayed, and an associated and interactive display of target text content is supported during the playing process of the associated multimedia content, so that a user may has an intuitive understanding of the relationship between the target text content and the associated multimedia content. The user's interactive experience is improved.

In some examples, the method for multimedia processing may further include: receiving a download operation for the associated multimedia content from a user, downloading and storing the associated multimedia content.

The client can detect a user's operation, receive the user's download operation of the associated multimedia content, download the associated multimedia content and store a file of the associated multimedia content. Among them, the download operation may be a user's triggering operation to a setting button or setting information in the display interface of the associated multimedia content.

For example, referring to FIG. 2, when a user clicks the "download multimedia" button in the lower right corner of the second display 20, the multimedia summary can be downloaded and stored. Also, referring to FIG. 2, when the user clicks "export document" in the summary playing interface, a text file of the conference summary can be exported for the user to use.

In the above schemes, the associated multimedia content supports users to download files of it, so that users can use the files according to their actual needs. The user experience is improved.

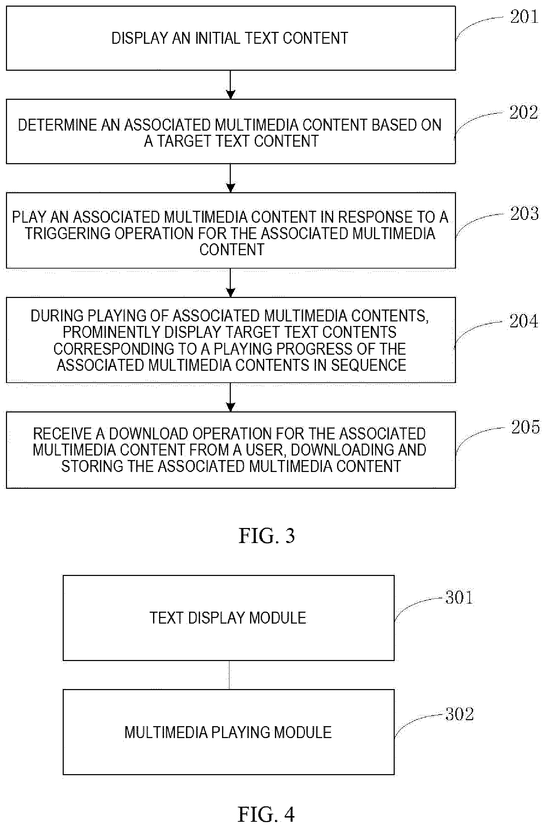

FIG 3 is a schematic diagram of another method for multimedia processing provided in one example in the dislosure. Based on the above examples, this example optimizes the above method of multimedia processing. As shown in FIG 3, the method includes:
Step 201: displaying an initial text content.

The initial text content corresponds to a target multimedia content.

Step 202, determining an associated multimedia content based on a target text content.

The associated multimedia content includes a segment associated with a target text content in the target multimedia content, and the target text content is extracted from the initial text content.

Step 202 can be executed before or after step 201, and this example is not limited to this.

Optionally, the determining an associated multimedia content based on a target text content, including: generating the associated multimedia content based on the associated time period of the target text content, wherein the associated time period of the target text content is used to characterize a time period of speech information corresponding to the target text content in the target multimedia content.

Optionally, the generating the associated multimedia content based on the associated time period of the target text content, including: in response to that there are a plurality of associated time periods, generating the associated multimedia content by joining a plurality of multimedia segments corresponding to the plurality of associated time periods according to an order of the plurality of associated time periods in the target multimedia content.

Optionally, the generating the associated multimedia content based on the associated time period of the target text content, including: adjusting the associated time period of the target text content based on a sentence integrity of an associated text of the target text content; and generating the associated multimedia content based on the adjusted associated time period. Wherein, the associated text is a text corresponding to the target text content in the initial text content.

Step 203, playing an associated multimedia content in response to a triggering operation for the associated multimedia content.

The target text content comprises at least two consecutive text segments extracted from the initial text content.

Optionally, the playing an associated multimedia content in response to a triggering operation for the associated multimedia content, including: in response to the triggering operation for the associated multimedia content, according to an order of associated time periods of the at least two consecutive text segments of the target text content in the target multimedia content, playing by jumping across multimedia segments in the target multimedia content, each of the multimedia segments corresponding to an associated time period of eachone of the consecutive text segments.

In some examples, the associated multimedia content is a multimedia summary, the multimedia summary comprises at least two multimedia sub-summaries, each multimedia sub-summary corresponds to a type of the summary, and there are at least two types of the summary.

Optionally, the playing an associated multimedia content in response to a triggering operation for the associated multimedia content, including: determining a target type of the summary corresponding to the triggering operation in response to the triggering operation for the associated multimedia content; and obtaining a target multimedia sub-summary corresponding to the target type of the summary and playing the target multimedia sub-summary; or obtaining the multimedia summary and playing the multimedia summary based on a time period of the target type of the summary in the multimedia summary.

After step 203, steps 204 and/or 205 can be executed, and this example is not limited to this.

Step 204, during playing of associated multimedia contents, prominently displaying target text contents corresponding to a playing progress of the associated multimedia contents in sequence.

Step 205, receiving a download operation for the associated multimedia content from a user, downloading and storing the associated multimedia content.

In this example, the target text content is a target text summary, and the target text summary comprises a summary of at least one type; the method for multimedia processing may further include: displaying an identification of the type of the summary corresponding to the target text summary in association on a play timeline of the associated multimedia content. Optionally, the displaying an identification of the type of the summary corresponding to the target text summary in association on the play timeline of the associated multimedia content, including: displaying the identification of the type of the summary corresponding to the target text summary at an associated time point corresponding to the target text summary on the play timeline of the associated multimedia content. Optionally, the associated time point corresponding to the target text summary is a time point in the associated time period of the target text summary.

The scheme of multimedia processing provided in one example in the disclosure, including: displaying an initial text content, determining an associated multimedia content based on a target text content extracted from the initial text content, playing an associated multimedia content in response to a triggering operation for the associated multimedia content. During playing of associated multimedia contents, prominently displaying target text contents corresponding to a playing progress of the associated multimedia contents in sequence. Receiving a download operation for the associated multimedia content from a user, downloading and storing the associated multimedia content. Using the above technical solution, the target text content and the corresponding associated multimedia content can be generated on the basis of the initial text content, and the associated multimedia content can be played when a user performs the triggering operation. Users can quickly understand the key points of the initial text content by watching the associated multimedia content, which could save time, help users to understand the initial text content, and improve the user experience. And the target text content can be prominently displayed along with the playing progress of the associated multimedia content, which enables users to have an intuitive understanding of the relationship between the target text content and the associated multimedia content and improve the user's interactive experience.

FIG. 4 is a schematic structural diagram of an apparatus for multimedia processing provided by one example in the disclosure. The apparatus may be implemented by software and/or hardware and may generally be integrated in an electronic device. As shown in FIG. 4, the apparatus comprises:
A text display module 301 configured to display an initial text content, wherein the initial text content corresponds to a target multimedia content; and a multimedia playing module 302 configured to play an associated multimedia content in response to a triggering operation for the associated multimedia content; wherein the associated multimedia content comprises a segment associated with a target text content in the target multimedia content, and the target text content is extracted from the initial text content.

Optionally, the target text content comprises at least two consecutive text segments extracted from the initial text content.

Optionally, the multimedia playing module 302 is configured to:
in response to the triggering operation for the associated multimedia content, according to an order of associated time periods of the at least two consecutive text segments of the target text content in the target multimedia content, play by jumping across multimedia segments in the target multimedia content, each of the multimedia segments corresponding to an associated time period of eachone of the consecutive text segments.

Optionally, the apparatus further includes an associated multimedia generation module configured to:
determine the associated multimedia content based on the target text content.

Optionally, the associated multimedia generation module is configured to:
generate the associated multimedia content based on the associated time period of the target text content, wherein the associated time period of the target text content is used to characterize a time period of speech information corresponding to the target text content in the target multimedia content.

Optionally, the associated multimedia generation module is configured to:
in response to that there are a plurality of associated time periods, generate the associated multimedia content by joining a plurality of multimedia segments corresponding to the plurality of associated time periods according to an order of the plurality of associated time periods in the target multimedia content.

Optionally, the associated multimedia generation module is configured to:
adjust the associated time period of the target text content based on a sentence integrity of an associated text of the target text content; and generate the associated multimedia content based on the adjusted associated time period.

Optionally, the associated text is a text corresponding to the target text content in the initial text content.

Optionally, the associated multimedia content is a multimedia summary, the multimedia summary comprises at least two multimedia sub-summaries, each multimedia sub-summary corresponds to a type of the summary, and there are at least two types of the summary.

Optionally, the multimedia playing module 302 is configured to:
determine a target type of the summary corresponding to the triggering operation in response to the triggering operation for the associated multimedia content; and obtain a target multimedia sub-summary corresponding to the target type of the summary and play the target multimedia sub-summary; or obtain the multimedia summary and play the multimedia summary based on a time period of the target type of the summary in the multimedia summary.

Optionally, the target text content is a target text summary, and the target text summary comprises a summary of at least one type; the apparatus further includes an identification module configured to:
display an identification of the type of the summary corresponding to the target text summary in association on a play timeline of the associated multimedia content.

Optionally, the identification module is configured to:
display the identification of the type of the summary corresponding to the target text summary at an associated time point corresponding to the target text summary on the play timeline of the associated multimedia content.

Optionally, the associated time point corresponding to the target text summary is a time point in the associated time period of the target text summary.

Optionally, the apparatus further includes a prominently displaying module configured to:
during playing of associated multimedia contents, prominently display target text contents corresponding to a playing progress of the associated multimedia contents in sequence.

Optionally, the apparatus further includes a summary download module configured to:
receive a download operation for the associated multimedia content from a user, download and store the associated multimedia content.

Optionally, the text display module 301 is configured to:
display the initial text content in response to a triggering operation for a list page, wherein the list page displays abstract information of a plurality of multimedia contents.

The apparatus for multimedia processing provided in the disclosure can execute the method for multimedia processing provided in any example of the disclosure and has corresponding functional modules and effects for executing the method.

The disclosure provides a computer program product comprising computer programs/instructions that, when executed by a processor, implement the method for multimedia processing provided in any example of the disclosure.

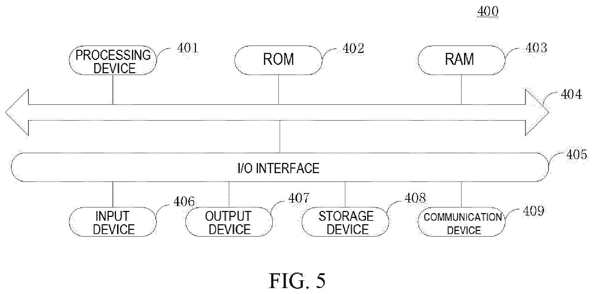

FIG 5 is a schematic structural diagram of an electronic device provided in an example of the disclosure. Referring to FIG 5 below, it shows a schematic structural diagram of a suitable electronic device 400 for implementing the examples of the disclosure. The electronic device 400 in the example of the disclosure may include but is not limited to mobile terminals such as mobile phones, laptops, digital broadcast receivers, personal digital assistants (PDAs), tablet computers (PADs), portable multimedia players (PMPs), car-mounted end points (such as car navigation terminals), and fixed terminals such as digital televisions (TVs), desktop computers, etc. The electronic device 400 shown in FIG 5 is only an example and should not bring any restrictions on the functions and scope of use of the examples of the disclosure.

As shown in FIG 5, the electronic device 400 may include a processing device (such as a Central Processor, graphics processing unit, etc.) 401, which can perform various appropriate actions and processes based on programs stored in Read-Only Memory (ROM) 402 or programs loaded from storage device 408 into Random Access Memory (RAM) 403. In RAM 403, various programs and data required for the operation of the electronic device 400 are also stored. The processing device 401, ROM 402, and RAM 403 are connected to each other via bus 404. The input/output (I/O) interface 405 is also connected to bus 404.

Typically, the following devices can be connected to the I/O interface 405: input device 406 including touch screens, touchpads, keyboards, mice, cameras, microphones, accelerometers, gyroscopes, etc.; output device 407 including liquid crystal displays (LCDs), speakers, vibrators, etc.; storage device 408 including magnetic tapes, hard disks, etc.; and communication device 409. Communication device 409 can allow electronic device 400 to communicate wirelessly or wiredly with other devices to exchange data. Although FIG 5 shows an electronic device 400 with multiple devices, it is not required to implement or have all of the devices shown. More or fewer devices can be implemented or provided instead.

According to examples of the disclosure, the process described above with reference to the flowchart can be implemented as a computer software program. For example, examples of the disclosure include a computer program product that includes a computer program carried on a non-transitory computer-readable medium, the computer program containing program code for performing the method shown in the flowchart. In such examples, the computer program can be downloaded and installed from the network through the communication device 409, or installed from the storage device 408, or installed from the ROM 402. When the computer program is executed by the processing device 401, the above functions defined in the method for multimedia processing of the examples of the disclosure are performed.

The computer-readable storage medium described above can be a computer-readable signal medium or a computer-readable storage medium, or any combination thereof. The computer-readable storage medium can be, for example, but not limited to, an electrical, magnetic, optical, electromagnetic, infrared, or semiconductor system, device, or apparatus, or any combination thereof. Examples of computer-readable storage medium can include but are not limited to: an electrical connection with one or more wires, a portable computer disk, a hard disk, RAM, ROM, an erasable programmable read-only memory (EPROM or flash memory), an optical fiber, a portable compact disk read-only memory (CD-ROM), an optical storage device, a magnetic storage device, or any suitable combination thereof. In the disclosure, a computer-readable storage medium can be any tangible medium containing or storing a program that can be used by an instruction execution system, apparatus, or device, or in combination thereof. In the disclosure, a computer-readable signal medium can include a data signal propagated in baseband or as part of a carrier wave, which carries computer-readable program code. Such propagated data signals can take many forms, including but not limited to electromagnetic signals, optical signals, or any suitable combination thereof. Computer-readable signal medium can also be any computer-readable medium other than computer-readable storage medium, which can send, propagate, or transmit programs for use by or in conjunction with instruction execution systems, apparatus, or devices. The program code contained on the computer-readable medium can be transmitted using any suitable medium, including but not limited to: wires, optical cables, radio frequency (RF), etc., or any suitable combination thereof.

In some implementation methods, clients and servers can communicate using any currently known or future developed network protocol such as HyperText Transfer Protocol (HTTP) and can interconnect with any form or medium of digital data communication (such as communication networks). Examples of communication networks include local area networks (LANs), wide area networks (WANs), the international network (such as the Internet), and end-to-end networks (such as ad hoc end-to-end networks), as well as any currently known or future developed networks.

The computer-readable medium can be included in the electronic device, or it can exist alone and not assembled into the electronic device.

The computer-readable medium carries one or more programs, and when the one or more programs are executed by the electronic device, the electronic device: displays an initial text content, wherein the initial text content corresponds to a target multimedia content; and plays an associated multimedia content in response to a triggering operation for the associated multimedia content; wherein the associated multimedia content comprises a segment associated with a target text content in the target multimedia content, and the target text content is extracted from the initial text content.

It may be one or more programming languages or combinations thereof to write computer program code for performing the operations of the disclosure, the above-described programming languages include but are not limited to Object Oriented programming languages - such as Java, Smalltalk, C++, further including conventional procedural programming languages - such as "C" language or similar programming languages. The program code may be executed entirely on the user's computer, partially executed on the user's computer, executed as a standalone software package, partially executed on the user's computer on a remote computer, or entirely on a remote computer or server. In the case of a remote computer, the remote computer may be any kind of network - including LAN or WAN - connected to the user's computer or may be connected to an external computer (e.g., using an Internet service provider to connect via the Internet).

The flowcharts and block diagrams in the accompanying drawings illustrate the architecture, functions, and operations of the system, method, and computer program product that may be implemented in accordance with various examples of the disclosure. In this regard, each block in the flowcharts or block diagrams may represent a module, program segment, or portion of code that contains one or more executable instructions for implementing a specified logical function. It should also be noted that in some alternative implementations, the functions marked in the blocks may also occur in a different order than those marked in the drawings. For example, two consecutive blocks may actually be executed substantially in parallel, and they may sometimes be executed in the opposite order, depending on the function involved. It should also be noted that each block in the block diagrams and/or flowcharts, as well as combinations of blocks in the block diagrams and/or flowcharts, may be implemented using a dedicated hardware-based system that performs the specified function or operation, or may be implemented using a combination of dedicated hardware and computer instructions.

The units described in the disclosed examples can be implemented by software or by hardware. The name of the unit does not constitute a limitation on the unit itself in one case.

The functions described above in this article can be performed at least in part by one or more hardware logic components. For example, without limitation, example types of hardware logic components that can be used include: Field Programmable Gate Arrays (FPGAs), Application Specific Integrated Circuits (ASICs), Application Specific Standard Parts (ASSPs), System on Chip (SOCs), Complex Programmable Logic Devices (CPLDs), and so on.

In the context of this disclosure, machine-readable medium can be tangible medium that can contain or store programs for use by or in conjunction with instruction execution systems, devices, or devices. Machine-readable medium can be machine-readable signal medium or machine-readable storage medium. Machine-readable medium can include, but are not limited to, electronic, magnetic, optical, electromagnetic, infrared, or semiconductor systems, devices, or devices, or any suitable combination thereof. Examples of machine-readable storage medium may include electrical connections based on one or more wires, portable computer disks, hard disks, RAM, ROM, EPROM or flash memory, optical fibers, CD-ROMs, optical storage devices, magnetic storage devices, or any suitable combination thereof.

According to one or more examples of the disclosure, the disclosure provides a method for multimedia processing comprising:
displaying an initial text content, wherein the initial text content corresponds to a target multimedia content; and
playing an associated multimedia content in response to a triggering operation for the associated multimedia content;
wherein the associated multimedia content comprises a segment associated with a target text content in the target multimedia content, and the target text content is extracted from the initial text content.

According to one or more examples of the disclosure, in the method for multimedia processing provided in the disclosure, the target text content comprises at least two consecutive text segments extracted from the initial text content.

According to one or more examples of the disclosure, in the method for multimedia processing provided in the disclosure, the playing an associated multimedia content in response to a triggering operation for the associated multimedia content, including:
in response to the triggering operation for the associated multimedia content, according to an order of associated time periods of the at least two consecutive text segments of the target text content in the target multimedia content, playing by jumping across multimedia segments in the target multimedia content, each of the multimedia segments corresponding to an associated time period of eachone of the consecutive text segments.

According to one or more examples of the disclosure, the method for multimedia processing provided in the disclosure further including:
determining the associated multimedia content based on the target text content.

According to one or more examples of the disclosure, in the method for multimedia processing provided in the disclosure, the determining the associated multimedia content based on the target text content, including:
generating the associated multimedia content based on the associated time period of the target text content, wherein the associated time period of the target text content is used to characterize a time period of speech information corresponding to the target text content in the target multimedia content.

According to one or more examples of the disclosure, in the method for multimedia processing provided in the disclosure, the generating the associated multimedia content based on the associated time period of the target text content, including:
in response to that there are a plurality of associated time periods, generating the associated multimedia content by joining a plurality of multimedia segments corresponding to the plurality of associated time periods according to an order of the plurality of associated time periods in the target multimedia content.

According to one or more examples of the disclosure, in the method for multimedia processing provided in the disclosure, the generating the associated multimedia content based on the associated time period of the target text content, including:
adjusting the associated time period of the target text content based on a sentence integrity of an associated text of the target text content; and
generating the associated multimedia content based on the adjusted associated time period.

According to one or more examples of the disclosure, in the method for multimedia processing provided in the disclosure, the associated text is a text corresponding to the target text content in the initial text content.

According to one or more examples of the disclosure, in the method for multimedia processing provided in the disclosure, the associated multimedia content is a multimedia summary, the multimedia summary comprises at least two multimedia sub-summaries, each multimedia sub-summary corresponds to a type of the summary, and there are at least two types of the summary.

According to one or more examples of the disclosure, in the method for multimedia processing provided in the disclosure, the playing an associated multimedia content in response to a triggering operation for the associated multimedia content, including:
determining a target type of the summary corresponding to the triggering operation in response to the triggering operation for the associated multimedia content; and
obtaining a target multimedia sub-summary corresponding to the target type of the summary and playing the target multimedia sub-summary; or obtaining the multimedia summary and playing the multimedia summary based on a time period of the target type of the summary in the multimedia summary.

According to one or more examples of the disclosure, in the method for multimedia processing provided in the disclosure, the target text content is a target text summary, and the target text summary comprises a summary of at least one type,
the method also includes:
displaying an identification of the type of the summary corresponding to the target text summary in association on a play timeline of the associated multimedia content.

According to one or more examples of the disclosure, in the method for multimedia processing provided in the disclosure, the displaying an identification of the type of the summary corresponding to the target text summary in association on the play timeline of the associated multimedia content, including:
displaying the identification of the type of the summary corresponding to the target text summary at an associated time point corresponding to the target text summary on the play timeline of the associated multimedia content.

According to one or more examples of the disclosure, in the method for multimedia processing provided in the disclosure, the associated time point corresponding to the target text summary is a time point in the associated time period of the target text summary.

According to one or more examples of the disclosure, the method for multimedia processing provided in the disclosure further including:
during playing of associated multimedia contents, prominently displaying target text contents corresponding to a playing progress of the associated multimedia contents in sequence.

According to one or more examples of the disclosure, the method for multimedia processing provided in the disclosure further including:
receiving a download operation for the associated multimedia content from a user, downloading and storing the associated multimedia content.

According to one or more examples of the disclosure, in the method for multimedia processing provided in the disclosure, the displaying an initial text content, including:
displaying the initial text content in response to a triggering operation for a list page, wherein the list page displays abstract information of a plurality of multimedia contents.

According to one or more examples of the disclosure, the disclosure provides an apparatus for multimedia processing comprising:
a text display module configured to display an initial text content, wherein the initial text content corresponds to a target multimedia content; and
a multimedia playing module configured to play an associated multimedia content in response to a triggering operation for the associated multimedia content.
wherein the associated multimedia content comprises a segment associated with a target text content in the target multimedia content, and the target text content is extracted from the initial text content.

According to one or more examples of the disclosure, in the apparatus for multimedia processing provided in the disclosure, the target text content comprises at least two consecutive text segments extracted from the initial text content.

According to one or more examples of the disclosure, in the apparatus for multimedia processing provided in the disclosure, the multimedia playing module is configured to:
in response to the triggering operation for the associated multimedia content, according to an order of associated time periods of the at least two consecutive text segments of the target text content in the target multimedia content, play by jumping across multimedia segments in the target multimedia content, each of the multimedia segments corresponding to an associated time period of eachone of the consecutive text segments.

According to one or more examples of the disclosure, in the apparatus for multimedia processing provided in the disclosure, the apparatus further includes an associated multimedia generation module, which is configured to:
determine the associated multimedia content based on the target text content.

According to one or more examples of the disclosure, in the apparatus for multimedia processing provided in the disclosure, the associated multimedia generation module is configured to:
generate the associated multimedia content based on the associated time period of the target text content, wherein the associated time period of the target text content is used to characterize a time period of speech information corresponding to the target text content in the target multimedia content.

According to one or more examples of the disclosure, in the apparatus for multimedia processing provided in the disclosure, the associated multimedia generation module is configured to:
in response to that there are a plurality of associated time periods, generate the associated multimedia content by joining a plurality of multimedia segments corresponding to the plurality of associated time periods according to an order of the plurality of associated time periods in the target multimedia content.

According to one or more examples of the disclosure, in the apparatus for multimedia processing provided in the disclosure, the associated multimedia generation module is configured to:
adjust the associated time period of the target text content based on a sentence integrity of an associated text of the target text content; and
generate the associated multimedia content based on the adjusted associated time period.

According to one or more examples of the disclosure, in the apparatus for multimedia processing provided in the disclosure, the associated text is a text corresponding to the target text content in the initial text content.

According to one or more examples of the disclosure, in the apparatus for multimedia processing provided in the disclosure, the associated multimedia content is a multimedia summary, the multimedia summary comprises at least two multimedia sub-summaries, each multimedia sub-summary corresponds to a type of the summary, and there are at least two types of the summary.

According to one or more examples of the disclosure, in the apparatus for multimedia processing provided in the disclosure, the multimedia playing module is configured to:
determine a target type of the summary corresponding to the triggering operation in response to the triggering operation for the associated multimedia content; and
obtain a target multimedia sub-summary corresponding to the target type of the summary and play the target multimedia sub-summary.

Alternatively, obtain the multimedia summary and playing the multimedia summary based on a time period of the target type of the summary in the multimedia summary.

According to one or more examples of the disclosure, in the apparatus for multimedia processing provided in the disclosure, the target text content is a target text summary, and the target text summary comprises a summary of at least one type,
the apparatus also includes an identification module, which is configured to:
display an identification of the type of the summary corresponding to the target text summary in association on a play timeline of the associated multimedia content.

According to one or more examples of the disclosure, in the apparatus for multimedia processing provided in the disclosure, the identification module is configured to:
display the identification of the type of the summary corresponding to the target text summary at an associated time point corresponding to the target text summary on the play timeline of the associated multimedia content.

According to one or more examples of the disclosure, in the apparatus for multimedia processing provided in the disclosure, the associated time point corresponding to the target text summary is a time point in the associated time period of the target text summary.

According to one or more examples of the disclosure, in the apparatus for multimedia processing provided in the disclosure, the apparatus further includes a prominently displaying module, which is configured to:
during playing of associated multimedia contents, prominently display target text contents corresponding to a playing progress of the associated multimedia contents in sequence.

According to one or more examples of the disclosure, the apparatus for multimedia processing provided in the disclosure further includes a summary download module, which is configured to:
receive a download operation for the associated multimedia content from a user, download and store the associated multimedia content.

According to one or more examples of the disclosure, in the apparatus for multimedia processing provided in the disclosure, the text display module is configured to:
display the initial text content in response to a triggering operation for a list page, wherein the list page displays abstract information of a plurality of multimedia contents.

According to one or more examples of the disclosure, the disclosure provides an electronic device comprising:
a processor, and
a memory configured to store instructions that are executable by the processor,
the processor being configured to read the instructions from the memory and execute the instructions to implement the method for multimedia processing provided in this disclosure.

According to one or more examples of the disclosure, the disclosure provides a computer-readable storage medium storing a computer program that is used to execute the method for multimedia processing provided in the disclosure.

In addition, although multiple operations are depicted in a specific order, this should not be understood as requiring these operations to be performed in the specific order shown or in a sequential order. In certain environments, multitasking and parallel processing may be advantageous. Similarly, although multiple implementation details are included in the above discussion, these should not be construed as limiting the scope of the disclosure. Some features described in the context of individual examples can also be implemented in combination in a single example. Conversely, multiple features described in the context of a single example can also be implemented in multiple examples separately or in any suitable subcombination.

## Claims

1. A method for multimedia processing, comprising:
displaying an initial text content, wherein the initial text content corresponds to a target multimedia content; and
playing an associated multimedia content in response to a triggering operation for the associated multimedia content;
wherein the associated multimedia content comprises a segment associated with a target text content in the target multimedia content, and the target text content is extracted from the initial text content.

2. The method of claim 1, wherein the target text content comprises at least two consecutive text segments extracted from the initial text content.

3. The method of claim 2, wherein the playing an associated multimedia content in response to a triggering operation for the associated multimedia content comprises:
in response to the triggering operation for the associated multimedia content, according to an order of associated time periods of the at least two consecutive text segments of the target text content in the target multimedia content, playing by jumping across multimedia segments in the target multimedia content, each of the multimedia segments corresponding to an associated time period of one of the consecutive text segments.

4. The method of claim 1, further comprising:
determining the associated multimedia content based on the target text content.

5. The method of claim 4, wherein the determining the associated multimedia content based on the target text content comprises:
generating the associated multimedia content based on the associated time period of the target text content, wherein the associated time period of the target text content is used to characterize a time period of speech information corresponding to the target text content in the target multimedia content.

6. The method of claim 5, wherein the generating the associated multimedia content based on the associated time period of the target text content comprises:
in response to that there are a plurality of associated time periods, generating the associated multimedia content by joining a plurality of multimedia segments corresponding to the plurality of associated time periods according to an order of the plurality of associated time periods in the target multimedia content.

7. The method of claim 5, wherein the generating the associated multimedia content based on the associated time period of the target text content comprises:
adjusting the associated time period of the target text content based on a sentence integrity of an associated text of the target text content; and
generating the associated multimedia content based on the adjusted associated time period.

8. The method of claim 7, wherein the associated text is a text corresponding to the target text content in the initial text content.

9. The method of claim 1, wherein the associated multimedia content is a multimedia summary, the multimedia summary comprises at least two multimedia sub-summaries, each multimedia sub-summary corresponds to a type of the summary, and there are at least two types of the summary.

10. The method of claim 9, wherein the playing an associated multimedia content in response to a triggering operation for the associated multimedia content comprises:
determining a target type of the summary corresponding to the triggering operation in response to the triggering operation for the associated multimedia content; and
obtaining a target multimedia sub-summary corresponding to the target type of the summary and playing the target multimedia sub-summary; or obtaining the multimedia summary and playing the multimedia summary based on a time period of the target type of the summary in the multimedia summary.

11. The method of claim 1, wherein the target text content is a target text summary, and the target text summary comprises a summary of at least one type; and
the method further comprises:
displaying an identification of the type of the summary corresponding to the target text summary in association on a play timeline of the associated multimedia content.

12. The method of claim 11, wherein the displaying an identification of the type of the summary corresponding to the target text summary in association on the play timeline of the associated multimedia content comprises:
displaying the identification of the type of the summary corresponding to the target text summary at an associated time point corresponding to the target text summary on the play timeline of the associated multimedia content.

13. The method of claim 12, wherein the associated time point corresponding to the target text summary is a time point in the associated time period of the target text summary.

14. The method of claim 1, further comprising:
during playing of associated multimedia contents, prominently displaying target text contents corresponding to a playing progress of the associated multimedia contents in sequence.

15. The method of claim 1, further comprising:
receiving a download operation for the associated multimedia content from a user, downloading and storing the associated multimedia content.

16. The method of claim 1, wherein the displaying an initial text content comprises:
displaying the initial text content in response to a triggering operation for a list page, wherein the list page displays abstract information of a plurality of multimedia contents.

17. An apparatus for multimedia processing, comprising:
a text display module configured to display an initial text content, wherein the initial text content corresponds to a target multimedia content; and
a multimedia playing module configured to play an associated multimedia content in response to a triggering operation for the associated multimedia content;
wherein the associated multimedia content comprises a segment associated with a target text content in the target multimedia content, and the target text content is extracted from the initial text content.

18. An electronic device, comprising:
a processor; and
a memory configured to store instructions that are executable by the processor;
the processor being configured to read the instructions from the memory and execute the instructions to implement the method for multimedia processing according to any of claims 1-16.

19. A computer-readable storage medium storing a computer program that is used to execute the method for multimedia processing according to any of claims 1-16.
